(19) Europäisches Patentamt
European Patent Office
Office européen des brevets

(11) Veröffentlichungsnummer: **0 184 556 B1**

(12) # EUROPÄISCHE PATENTSCHRIFT

(45) Veröffentlichungstag der Patentschrift: **12.06.91**

(51) Int. Cl.[5]: **C09B 67/54**, C09B 67/24, //C09B69/02,C09B62/04, D06P3/66,D06P1/382

(21) Anmeldenummer: **85810571.1**

(22) Anmeldetag: **02.12.85**

(54) **Verfahren zur Herstellung konzentrierter salzarmer wässriger Lösungen von Aminotriazinyl-Reaktivfarbstoffen.**

(30) Priorität: **07.12.84 CH 5821/84**

(43) Veröffentlichungstag der Anmeldung:
**11.06.86 Patentblatt 86/24**

(45) Bekanntmachung des Hinweises auf die Patenterteilung:
**12.06.91 Patentblatt 91/24**

(84) Benannte Vertragsstaaten:
**BE CH DE FR GB LI**

(56) Entgegenhaltungen:
**EP-A- 0 029 960**
**FR-A- 2 124 359**
**GB-A- 1 318 111**

(73) Patentinhaber: **CIBA-GEIGY AG**
**Klybeckstrasse 141**
**CH-4002 Basel(CH)**

(72) Erfinder: **Lacroix, Roger, Dr.**
**Rue Vauban 24**
**F-68300 Village-Neuf(FR)**
Erfinder: **Ruhlmann, Edmond, Dr.**
**Rue de Buschwiller 1**
**F-68300 Saint-Louis(FR)**

**EP 0 184 556 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung konzentrierter salzarmer, wässriger Lösungen von Aminotriazinyl-Reaktivfarbstoffen, die nach diesem Verfahren erhaltenen Farbstofflösungen, sowie deren Verwendung.

Flüssige Präparate von Reaktivfarbstoffen weisen gegenüber der festen Handelsform wie Pulver oder Granulat, eine Reihe von Vorteilen auf, z.B. keine Staubentwicklung beim Ansetzen der Klotz- und Färbeflotten oder auch Druckpasten; keine Benetzungsprobleme durch Klumpenbildung, keine fleckigen Färbungen durch ungenügend gelöste Farbstoffteilchen. Nicht zuletzt wegen dieser Vorteile, verbunden mit einer guten Dosierbarkeit der flüssigen Handelsform findet man heute in zunehmendem Masse Flüssigmarken auf dem Markt, wobei der Trend zu immer konzentrierteren Lösungen geht, da so erhebliche Einsparungen bei Transport und Lagerhaltung möglich sind.

Bei Farbstofflösungen generell und insbesondere bei konzentrierten Präparaten treten jedoch immer wieder Schwierigkeiten in bezug auf deren Lagerfähigkeit auf. Je konzentrierter eine Farbstofflösung ist, um so leichter kommt es während der Lagerung zu Rekristallisationserscheinungen und es bilden sich mehr oder weniger grosse Agglomerate, die sich z.B. bei der Anwendung derartiger Präparate im Textildruck in Form von Spickeln als äusserst störend bemerkbar machen. Darüberhinaus wird auch oft die Bildung eines festen Bodensatzes beobachtet, der sich nur mit Mühe aufrühren lässt. Der Farbstoff ist in solchen Fällen nicht mehr vollständig in Lösung zu bringen.

Es gibt verschiedene Möglichkeiten, die Löslichkeit anionischer Farbstoffe zu erhöhen und auf diese Weise die Stabilität der Farbstofflösungen zu verbessern. Eine ganz wesentliche Massnahme besteht darin, den synthesebedingten Salzgehalt der Farbstofflösung zu senken. Dies geschieht heute mehr und mehr durch Membrantrennverfahren, die eine rasche Entsalzung des Farbstoffs erlauben (siehe z.B. EP-A-0059782), wobei man sowohl von der rohen Syntheselösung, als auch dem angeschlämmten Farbstoffpresskuchen ausgehen kann.

Doch auch entsalzte Farbstofflösungen lassen sich oft nicht genügend aufkonzentrieren oder man erhält konzentrierte Lösungen, aus denen der Farbstoff bei Lagertemperaturen um den Gefrierpunkt irreversibel ausfällt. In solchen Fällen kann unter Umständen der Zusatz von Lösungsvermittlern weiterhelfen. Diese gelangen jedoch nach der Färbung ins Abwasser und belasten die Kläranlagen. Um derartige Zusätze zu vermeiden, kann man die Wasserlöslichkeit auch dadurch verbessern, dass man den Farbstoff, der am Ende der Synthese, nach dem Aussalzen, üblicherweise in der Natriumsalzform vorliegt, in ein leichter lösliches Salz, z.B. das Lithiumsalz überführt. Dies gelingt beispielsweise mit Hilfe der Donnan-Dialyse (siehe EP-A-O 126 830). Nach diesem eleganten Verfahren kann ein saurer Farbstoff praktisch vollständig von der Natrium- in die Lithiumsalzform umgewandelt werden. Nachteil dieses Verfahrens ist jedoch, dass relativ grosse Mengen an Dialyselösung verbraucht werden.

Die Aufgabe der vorliegenden Erfindung bestand demnach darin, ohne grossen apparativen Aufwand gut wasserlösliche Farbstoffsalze von Reaktivfarbstoffen der Aminotriazinyl-Reihe herzustellen.

Gefunden wurde, dass überraschenderweise eine drastische Verbesserung der Wasserlöslichkeit derartiger Farbstoffe bereits dadurch erreicht wird, wenn diese in ein gemischtes Lithium/Ammoniumsalz überführt werden, was in einfacher Weise dadurch möglich ist, dass man von einem sulfogruppenhaltigen nichtreaktiven Farbstoff ausgeht, der zumindest teilweise in der Ammoniumsalzform ($-SO_3^{\ominus}NH_4^{\oplus}$) vorliegt und diesen in Gegenwart von Lithiumhydroxid mit Cyanurhalogenid - der Reaktivkomponente - umsetzt. Anschliessend wird die salzhaltige, den fertigen Reaktivfarbstoff enthaltende Syntheselösung mit Hilfe eines Membrantrennverfahrens entsalzt und aufkonzentriert.

Gegenstand der vorliegenden Erfindung ist somit ein Verfahren zur Herstellung konzentrierter salzarmer wässriger Lösungen von Aminotriazinyl-Reaktivfarbstoffen, das dadurch gekennzeichnet ist, dass man von einem sulfogruppenhaltigen Farbstoff ausgeht, der einen oder mehrere mit Cyanurhalogenid reaktionsfähige Reste enthält und der zumindest teilweise als Ammoniumsalz vorliegt, diesen mit einem Cyanurhalogenid in Gegenwart von Lithiumhydroxid umsetzt und die salzhaltige Syntheselösung mittels eines Membrantrennverfahrens entsalzt und aufkonzentriert.

Die gemischten Lithium/Ammoniumsalze der sauren Aminotriazinyl-Reaktivfarbstoffe sind etwa doppelt so gut wasserlöslich, wie die entsprechenden Natrium-, Kalium- oder Ammoniumsalze. Sie eignen sich daher hervorragend zur Herstellung konzentrierter Farbstofflösungen, wie sie beispielsweise in der Kontinuefärbung wegen der leichten Dosierbarkeit bevorzugt eingesetzt werden.

Als sulfogruppenhaltige Farbstoffe, die nach dem erfindungsgemässen Verfahren mit einem Cyanurhalogenid zu den entsprechenden Reaktivfarbstoffen umgesetzt werden, kommen neben Dis- und Polyazofarbstoffen in erster Linie Monoazofarbstoffe in Frage. Die Azofarbstoffekönnen sowohl metallisiert, wie auch metallfrei sein. Natürlich können auch saure Anthrachinon-, Formazan-, Phthalocyanin-oder Dioxazinfarbstoffe nach vorliegendem Verfahren zu faserreaktiven Farbstoffsalzen umgesetzt werden.

Derartige Farbstoffe sind in grosser Zahl bekannt oder können nach bekannten Methoden erhalten werden. Wesentlich ist, dass die Farbstoffe einen oder mehrere geeignete Reste aufweisen, über die sich das Cyanurhalogenid ankondensieren lässt. Als solche Reste kommen in erster Linie gegebenenfalls monoalkylierte Aminogruppen,wie z.B. die $-NH_2$, $-NHCH_3$, $-NHC_2H_5$ oder $-NHC_3H_7$ Gruppe in Frage. Diese Gruppen können direkt oder über ein Brückenglied an das aromatische System des Farbstoffs gebunden sein. In Betracht kommen in erster Linie Farbstoffe, die den folgenden Klassen angehören:

1. Monoazofarbstoffe der Formel

(1) 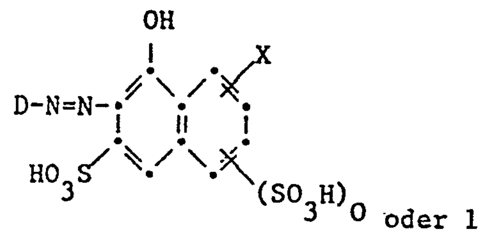

worin D einen Rest der Benzol- oder Naphthalinreihe bedeutet, wie z.B. den Phenyl-, Naphthyl-, Stilben-, Diphenyl-, Benzthiazolyl-phenyl-oder Diphenylaminrest, der durch Sulfogruppen, Halogen, wie z.B. Chlor, Alkylaminogruppen, wie z.B. Aethylamino oder Methylamino, ferner Benzoylamino, oder auch die $NH_2$-Gruppe, ferner Alkoxy, wie z.B. Methoxy, Hydroxy oder auch Carboxy substituiert sein kann und X eine gegebenenfalls alkylierte Aminogruppe ist, wie z.B. $-NH_2$ oder $-NHCH_3$, die in der 5-, 6-, 7- oder 8-Stellung des Naphthalinkerns gebunden ist.

2. Monoazofarbstoffe der Formel

(2) 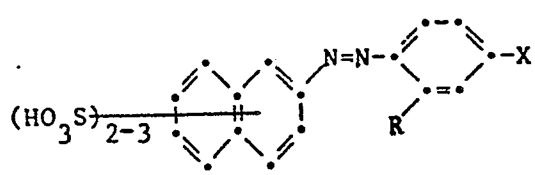

worin X die vorstehend angegebene Bedeutung hat und R für eine mit einer $C_2$ bis $C_4$ Monocarbonsäure acylierte Aminogruppe oder die Ureidogruppe steht.

3. Disazofarbstoffe der Formel

(3) 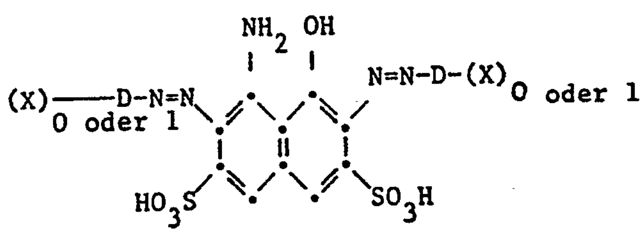

worin die Reste D und X die vorstehend angegebene Bedeutung haben.

4. Disazofarbstoffe der Formel

(4) 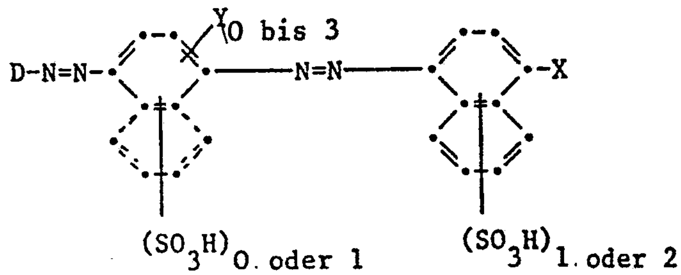

worin die Reste D und X die vorstehend angegebene Bedeutung haben und Y für eine $C_1$-$C_4$-Alkyl oder eine $C_1$ bis $C_4$ Alkoxygruppe steht.

Nach dem erfindungsgemässen Verfahren werden bevorzugt Monoazofarbstoffe der unter 2 angegebenen Struktur mit einem Cyanurhalogenid umgesetzt und anschliessend zu einem lagerfähigen Flüssigpräparat verarbeitet.

Bevorzugt werden im erfindungsgemässen Verfahren solche Farbstoffe eingesetzt, die mindestens 2 Sulfogruppen enthalten, insbesondere solche mit 2 bis 5 Sulfogruppen, wobei die Sulfogruppen zum Teil oder ganz in der Ammoniumsalzform vorliegen. Die Ammoniumsalze der Farbstoffe sind auf einfache Weise zugänglich, beispielswiese durch Neutralisieren der sauren Syntheselösung des Farbstoffs mit wässrigem Ammoniak.

Als Cyanurhalogenide werden in erster Linie Cyanurfluorid und vor allem Cyanurchlorid eingesetzt. Im Verlauf der Kondensationsreaktion wird ein Halogenatom des Cyanurhalogenids gegen den Farbstoffrest und ein zweites gegen eine Aminogruppe ausgetauscht. Da die Kondensation in Gegenwart von Lithiumhydroxid durchgeführt wird, liegen ein Teil der Sulfogruppen dem Ende der Reaktion als Lithiumsalz vor. Mit anderen Worten, Gegenionen der Sulfogruppen ($-SO_3^{\ominus}$), der auf diese Weise hergestellten Aminotriazinyl-Reaktivfarbstoffe, sind Lithium- und Ammoniumkationen. Der Lithium/Ammoniumgehalt des Endfarbstoffs lässt sich über den Ammoniumgehalt des Ausgangsfarbstoffs und die Menge an Lithiumhydroxid steuern, die bei der Kondensationsreaktion eingesetzt wird. Vorteilhaft liegt das Verhältnis von Lithium zu Ammonium im Endfarbstoff bei 1:1 bis 3:1. Bei diesem Verhältnis werden Farbstoffe mit sehr guter Wasserlöslichkeit erhalten, die in konzentrierten Lösungen weder zum Ausflocken noch zur Rekristallisation neigen.

Am Ende der Kondensationsreaktion fällt der Farbstoff in Form einer verdünnten wässrigen Syntheselösung oder -Suspension an, die neben dem Farbstoffsalz eine Reihe von synthesebedingten Inertsalzen enthält, wie z.B. Alkalimetallhalogenide oder -sulfate. Diese werden mit Hilfe eines Membrantrennverfahrens aus der Farbstofflösung bzw. -suspension entfernt, denn ein geringer Salzgehalt der Farbstofflösung ist für deren Lagerfähigkeit von entscheidender Bedeutung. Angestrebt wird eine praktisch vollständige Entsalzung, so dass weniger als 1 Gew.-%, vorzugsweise weniger als 0,5 Gew.-% Salz in der Farbstofflösung verbleiben.

Unter dem Ausdruck Membrantrennverfahren wird insbesondere die Hyperfiltration verstanden. Bei diesem Trennverfahren handelt es sich im Gegensatz zur üblichen Filtration, wobei Feststoffteilchen von einer Flüssigkeit abgetrennt werden, um eine selektive Molekulartrennmethode. Die Membran wirkt als Molekularsieb, und vermag aufgelöste Stoffe, bei ausreichender Molekülgrösse an der Membrangrenzfläche zurückzuhalten. Zweckmässig verwendet man Membranen mit einem "cut off level", der eine mindestens 90 %-ige Retention gewährleistet, wenn diese einer kontinuierlichen Hyperfiltration während 20 bis 30 Minuten unterworfen werden. Hierbei handelt es sich um solche Membranen, deren Trenngrenze im Molekulargewichtsbereich von 300 bis 800, vorzugsweise 400 bis 500 liegt, und die symmetrisch oder insbesondere asymmetrisch sind. Sie lassen Wasser und aufgelöste Stoffe, die auf Grund ihres Molekulargewichts unterhalb der Trenngrenze liegen, bei geringem bis mittlerem Druck durchtreten. Erfindungsgemäss werden Drucke von 10 bis 100 bar und vorzugsweise von 10 bis 30 bar verwendet.

Die im erfindungsgemässen Verfahren aufgrund ihrer guten Trenneigenschaften bevorzugt verwendeten Membranen bestehen aus einem polymeren Material, das vorwiegend an der Oberfläche durch saure oder basische Gruppen modifiziert ist.

Bei dem polymeren Membranmaterial handelt es sich um natürliche, halbsynthetische oder synthetische Materialien, die als reaktionsfähige Gruppen beispielsweise Hydroxyl, Amino- und/oder Amidoximgruppen enthalten. Derartige Materialien können mit geeigneten Reagenzien umgesetzt werden, die einerseits saure oder basische Gruppen und andererseits mindestens eine unter Bildung einer chemischen (kovalenten) Bindung reaktionsfähige Gruppierung enthalten.

Bei den sauren Gruppen handelt es sich in erster Linie um Carboxyl- und Sulfonsäuregruppen und bei den basischen Gruppen um primäre, sekundäre oder tertiäre Aminogruppen, ferner Phosphonium- oder Sulfoniumgruppen.

Beispielsweise können folgende Polymere in der angegebenen Weise modifiziert werden:

- Celluloseacetate, z.B. solche mit niedrigem Acetylgruppengehalt, aber auch höher acylierte Cellulose, z.B. sog. Zweieinhalbacetat, oder
- Polyvinylalkohole, oder
- Polyacrylnitril und Copolymere aus Acrylnitril und anderen äthylenisch ungesättigten Monomeren.

Als reaktive Reagenzien, die eine saure oder basiche Gruppe enthalten, kommen farblose und farbige Verbindungen in Betracht, vor allem saure Reaktivfarbstoffe, die verschiedenen Klassen angehören können, wie Anthrachinon-, Azo- oder Formazanfarbstoffe. Sie können gegebenenfalls auch als Metallkomplexe vorliegen.

Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer, enthalten. Derartige Membranen sind z.B. in den DE A-25 05 254 und 30 35 134 und in der EP-A-26399 beschrieben.

Die im erfindungsgemässen Verfahren verwendeten Membranen weisen vorzugsweise einen Porendurchmesser von 0,1 bis 50 nm auf.

Weitere geeignete Membranen, mit denen ebenfalls ein guter Entsalzungseffekt erzielt wird, sind z.B. solche auf Basis von gegebenenfalls modifiziertem Polysulfon, Polyamid oder Polystyrol.

Bei einem einmaligen Durchgang durch die Membran kann der Reinigungs/Entsalzungseffekt ohne nennenswerten Farbstoffverlust bis zu 70 % und mehr betragen. Dabei nimmt das Volumen der Lösung der zurückgehaltenen Substanzen (konzentratseitig) entsprechend ab und die Konzentration des zurückgehaltenen Teils zu.

Vorzugsweise hat die Syntheselösung vor dem Membrantrennverfahren einen Trockensubstanzgehalt von 5 bis 15 Gew.-% und die Aufkonzentrierung wird so lang durchgeführt, bis der Trockensubstanzgehalt auf einen Wert von 20 bis 50 % gestiegen ist.

Das Membrantrennverfahren wird vorteilhaft so durchgeführt, dass die Farbstofflösung, bzw. -Suspension zunächst weitgehend entsalzt wird. Zu diesem Zweck ersetzt man das abgetrennte Permeat farbstoffseitig durch die entsprechende Menge Wasser, zweckmässigerweise verwendet man demineralisiertes Wasser, und wäscht auf diese Weise die Farbstofflösung bis auf einen geringen Restsalzgehalt salzfrei. Anschliessend unterbricht man die Frischwasserzufuhr und trennt soviel Permeat ab, bis der gewünschte Trockengehalt erreicht ist. Vorteil dieser zweistufigen Fahrweise ist, dass keine hochviskosen thixothropen Farbstofflösungen entstehen, die sich leicht bilden, wenn die Farbstofflösung vor Entfernen der Hauptsalzmenge zu stark aufkonzentiert wird.

Zur Stabilisierung der Farbstofflösung gegen Hydrolyse erweist es sich als zweckmässig, diese auf einen pH-Wert um den Neutralpunkt, insbesondere auf einen pH von 7 bis 8 zu puffern, beispielsweise durch Zusatz eines Polyphosphats oder eines Hydrogen/Dihydrogenphosphat-Puffers.

Neben dem Puffer kann der aufkonzentrierten und entsalzten Lösung gegebenenfalls noch eine die Wasserlöslichkeit des Farbstoffs verbessernde Komponente zugegeben werden. Als derartiger Zusatz kommt insbesondere $\epsilon$ -Caprolactam und N-Methylpyrrolidon in Frage. Solche Zusätze, und das ist ein wesentlicher Vorteil des vorliegenden Verfahrens, sind im allgemeinen jedoch nicht oder in deutlich geringerer Menge nötig, als in bekannten Präparaten.

Ferner können die nach dem erfindungsgemässen Verfahren hergestellten Farbstofflösungen noch mit kleineren Mengen (je ca. 1 bis 10 g/l) weiterer eigenschaftsverbessernder Hilfsmittel versehen werden, welche gegenüber dem Reaktivfarbstoff inert sind, wie z.B. Tenside, schaumdämpfende Hilfsmittel, Frostschutzmittel, Pilz- und/oder Bakterienwachstum hemmende Stoffe.

Gegenstand der Erfindung sind ferner die nach dem erfindungsgemässen Verfahren erhaltenen lagerstabilen, wässrigen Lösungen faserreaktiver Aminotriazinylfarbstoffe, sowie deren Verwendung zur Herstellung von Klotzflotten, Färbebädern und Druckpasten zum Färben und Bedrucken von natürlichen und regenerierten cellulosischen Fasermaterialien, vor allem Baumwolle und Viskose; oder auch stickstoffhaltigem Fasermaterial, wie z.B. Polyamid.

Die Farbstofflösungen weisen bevorzugt die folgende Zusammensetzung auf:

10 bis 40 Gew.-% Aminotriazinylfarbstoff als Lithium/Ammonium-Salz
0,5 bis 5 Gew.-%, insbesondere 1,5 bis 2 Gew.% Polyphosphat oder
Hydrogen/Dihydrogenphosphat-Puffer; der Rest ist
Wasser.

Der Salzgehalt der Farbstofflösungen, abgesehen von den Puffersalzen zur Stabilisierung des pH-Wertes, liebt deutlich unter 1 Gew.-%.

Die Farbstofflösungen sind dünnflüssig und lassen sich über mehrere Monate bei Temperaturen um den Gefrierpunkt und bis +40°C aufbewahren, ohne dass sich Agglomerate oder ein festes Sediment bilden. Die Farbstofflösungen sind gegenüber Temperaturschwankungen weitgehend unempfindlich; auch bei längerer Lagerung kommt es zu keinen Rekristallisationserscheinungen.

Das erfindungsgemässe Verfahren lässt sich beispielsweise wie folgt durchführen:

Das Ammoniumsalz eines sulfogruppenhaltigen Azofarbstoffs wird in Wasser gelöst, die Lösung mit Lithiumhydroxid versetzt und auf ca. 0°C abgekühlt. In die kalte Lösung wird Cyanurchlorid eingetragen. Der pH-Wert der Lösung wird während der Kondensationsreaktion durch Zugabe von Lithiumhydroxid im Bereich von 4 bis 6 gehalten. Ist die Kondensation abgeschlossen, wird die Reaktionslösung nochmals mit Lithiumhydroxid versetzt und für die Dauer von ca. 5 bis 12 Stunden auf etwa 30 bis 70°C erhitzt. Der auf diese Weise hergestellte Aminotriazinylfarbstoff liegt als gemischtes Lithium/Ammonium-Salz vor und wird anschliessend mit Hilfe der Hyperfiltration entsalzt und aufkonzentriert.

Zur Entsalzung ist es zweckmässig, die Farbstofflösung (Syntheselösung) zu verdünnen und gegebenenfalls den pH-Wert auf etwa 6 bis 8 einzustellen. Anschliessend wird die Farbstofflösung hyperfiltriert, wobei das abgetrennte Permeat laufend durch Frischwasser ersetzt wird. Die Hyperfiltration kann beispielsweise in einem Rohrmembran-Modul durchgeführt werden, der mit einer anionisch modifizierten Membran bestückt ist, bei einem Arbeitsdruck von 20 bis 30 bar. Nachdem die Farbstofflösung weitgehend entsalzt ist (Restsalzgehalt << 1 Gew.-%) beginnt man mit der Aufkonzentrierungbis der Farbstoffgehalt der Lösung bei 20 bis 30 Gew.-% liegt. Schliesslich versetzt man die Farbstofflösung noch mit einem Tripolyphosphat als Puffersubstanz und verdünnt auf die handelsübliche Farbstärke. Die verkaufsfertige Farbstofflösung hat einen pH-Wert von 7 bis 8 und ist einwandfrei lagerstabil.

Gemäss einer Abwandlung des Verfahrens wird der sulfogruppenhaltige Farbstoff nach Ankondensieren des Triazin-Reaktivrestes noch mit einem farblosen Amin umgesetzt. Man erhält auf diese Weise die entsprechenden N-substituierten Aminotriazinfarbstoffe. Hierbei erweist es sich als zweckmässig, den Ausgangsfarbstoff in Form des Ammoniumsalzes einzusetzen und die Kondensation mit dem Cyanurhalogenid und die nachfolgende Umsetzung mit dem Amin unter Zusatz von Lithiumhydroxid durchzuführen. Der Farbstoff fällt dann als gemischtes Lithium/ Ammoniumsalz an, wobei das Verhältnis der Kationen zueinander zugunsten des Ammoniumanteils verschoben werden kann, indem man einen Teil der zur Kondensation verwendeten Lithiumhydroxidlösung durch wässrige Ammoniaklösung ersetzt. Farblose Amine, die am Triazinrest ankondensiert werden, sind z.B. aliphatische Mono- und Dialkylamine mit 1 bis 4 C-Atomen im Alkylrest, wie Methylamin, Dimethylamin, Aethylamin, Diäthylamin oder auch Hydroxyalkylamine, wie ß-Hydroxyäthylamin; in Frage kommen ferner aromatische Amine wie Anilin, Toluidin oder insbesondere Anilinsulfonsäuren, wie Anilin-2-sulfonsäure, Anilin-3-sulfonsäure oder Anilin-4-sulfonsäure.

In den nachfolgenden Beispielen, welche die Erfindung näher erläutern, bedeuten Teile, wenn nichts anderes angegeben, Gewichtsteile und Prozente Gewichtsprozente.

Beispiel 1: 545 Teile des Diammoniumsalzes von 3-Ureido-4-(3',6',8'-trisulfonaphth-2'-ylazo)-anilin werden bei Raumtemperatur in 5 000 Volumenteilen Wasser unter Zusatz von 250 Volumenteilen 4 N Lithiumhydroxidlösung gelöst und anschliessend durch Zugabe von 1 000 Teilen Eis auf 0°G abgekühlt. Dann gibt man 185 Teile Cyanurchlorid zu, das zuvor mit 100 Teilen Wasser und 200 Teilen Eis angeschlämmt wurde. Der pH-Wert des Reaktionsgemisches, das eine Temperatur von 0 bis 5°C aufweist, wird mittels wässrigem Lithiumhydroxid im Bereich von 4,5 bis 5,0 gehalten. Man benötigt dazu ca. 250 Volumenteile 4 N Lithiumhydroxidlösung. Die Reaktion ist nach etwa einer Stunde beendet. Die Reaktionsmasse wird dann mit 500 Volumenteilen 4N Lithiumhydroxidlösung versetzt und auf 40°G aufgeheizt. Nach 9 Stunden liegt der Aminotriazinyl-Reaktivfarbstoff der folgenden Formel (Formel 1) als gemischtes Lithium/Ammonium-Salz vor.

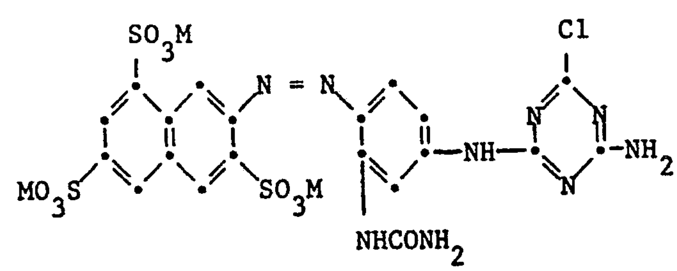

(1)

M = $Li^+$ und $NH_4^+$ im Verhältnis 3:2.

5600 Teile der salzhaltigen Synthesesuspension werden anschliessend mit 600 Teilen Wasser verdünnt (Trockengehalt der Suspension: 8,5 Gew.-%, Farbstoffgehalt: ca. 7 Gew.-%., Salzgehalt: 1,5 Gew.-%) und auf einer Anlage für Hyperfiltration (Membranfläche 0,84 $m^2$) entsalzt und aufkonzentriert. Als Membran verwendet man eine anionisch modifizierte Celluloseacetatmembran, deren Herstellung im Beispiel 1 der DE-0S 25 05 254 beschrieben ist, und die einen cut-off-level von 500 aufweist. Die Hyperfiltration wird in zwei Stufen bei einer Temperatur von ca. 20 °C und einem Druck von 25 bar durchgeführt; der pH-Wert der Farbstoffsuspension liegt bei 6,5 bis 7,5.

Zunächst erfolgt die Entsalzung, hierzu versetzt man die Farbstoffsuspension mit 6 600 Teilen demineralisiertem Wasser und trennt 6 600 Teile salzhaltiges Permeat ab. Durch diese Massnahmensinkt der Chloridgehalt auf 0,45 Gew.-% und der Farbstoff geht in Lösung. Anschliessend wird die Farbstofflösung aufkonzentriert. Hierzu entfernt man nochmals 4 500 Teile Permeat. Man erhält 1 700 Teile einer konzentrierten Farbstofflösung mit einem Trockensubstanzgehalt von 25 Gew.-%, deren Chloridgehalt (Lithiumchlorid, Ammoniumchlorid) geringer ist als 0,1 Gew.%. Der Farbstoff liegt in Lösung zu ca. 60 % als Lithiumsalz und zu ca. 40 % als Ammoniumsalz vor.

92 Teile der so erhaltenen Farbstofflösung werden unter Rühren mit 1,0 Teil Natriumtripolyphosphat gepuffert und mit 7,0 Teilen demineralisiertem Wasser verdünnt. Man erhält eine chemisch und physikalisch stabile Flüssighandelsform mit einem pH-Wert von ca. 7,5 der folgenden Zusammensetzung:

23 Gew.-% Farbstoff (Li/$NH_4$-Salz)
1 Gew.-% Natriumtripolyphosphat
76 Gew.-% Wasser

Die Flüssigformulierung ist niederviskos und bei Temperaturen um den Gefrierpunkt und bis +40 °C während mehrerer Monate unverändert haltbar.

Arbeitet man genau wie im obigen Beispiel beschrieben, führt jedoch die Kondensationsreaktion so durch, dass der Farbstoff als Natrium-, Natrium/Lithium-, Kalium-, Kalium/Lithium- oder Ammoniumsalz anfällt, so lässt sich keine lagerstabile Flüssigformulierung herstellen. Insbesondere bei Lagertemperaturen um 0 °C kommt es zur Bildung von Ausfällungen, die in der Wärme nicht mehr in Lösung gehen.

Beispiel 2: Verfährt man analog Beispiel 1 mit einer Lösung von 464 Teilen des Diammoniumsalzes von 3-Acetamido-4-(4',8'-disulfo-naphth-2'-ylazo)-anilin in 4000 Volumenteilen Wasser, so erhält man den Aminotriazinyl-Reaktivfarbstoff der folgenden Formel (Formel 2) als Lithium/Ammonium-Salz

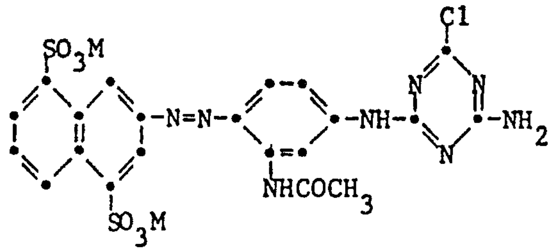

(2)

M = $Li^+$ und $NH_4^+$ im Verhältnis 3:1.

Das Verhältnis $Li^+/NH_4^+$ kann durch partiellen Ersatz von Lithiumhydroxid durch Ammoniak um 30% zugunsten des Ammoniumanteils verändert. werden.

Auf gleiche Art werden aus den Ammonium-Salzen der entsprechenden Aminoazofarbstoffe folgende Aminotriazinyl-Reaktivfarbstoffe als gemischte Lithium-Ammonium-Salze erhalten (Formeln 3 und 4).

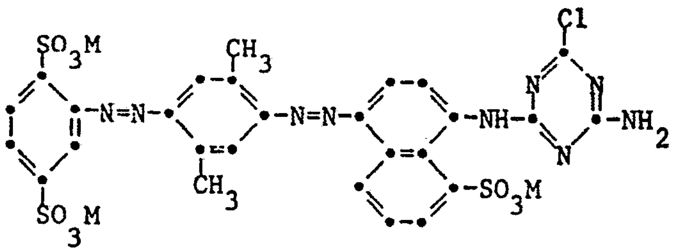

(3)

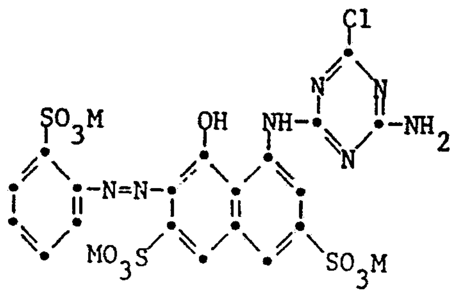

(4)

Die salzhaltigen Synthesesuspensionen der so hergestellten Farbstoffe werden wie im Beispiel 1 beschrieben mittels Hyperfiltration entsalzt und aufkonzentriert. In der folgenden Tabelle ist der Farbstoffgehalt der so hergestellten salzarmen Farbstofflösungen aufgeführt und dem Farbstoffgehalt der entsprechenden Lösungen gegenübergestellt, die den Farbstoff in Form des Natriumsalzes enthalten. Man sieht so deutlich die Löslichkeitszunahme bei Vorliegen des Farbstoffs in Form des $Li^{+}/NH_4^{+}$ -Salzes.

| Farbstoff | Farbstoff als $Li^{+}/NH_4^{+}$-Salz | Farbstoff als $Na^{+}$-Salz |
|---|---|---|
| 2 | 25 Gew.% | 18 Gew.% |
| 3 | 25 Gew.% | 19 Gew.% |
| 4 | 23 Gew.% | 16 Gew.% |

Die mit den Lithium/Ammoniumsalzen der Farbstoffe 2 bis 4 hergestellten Flüssigformulierungen sind dünnflüssig (Viskosität ca. 6 bis 10 cP bei 20 °C) und während mehrerer Monate bei -10 °C bis +40 °C unverändert haltbar.

Beispiel 3: 531 Teile des Farbstoffs der Formel 5a

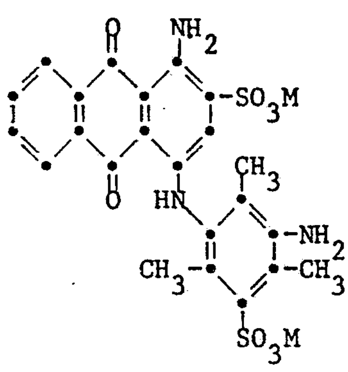

(5a)

der als Ammoniumsalz vorliegt ($M = NH_4^{+}$) wird in 4000 Volumenteilen Wasser unter Zusatz von 250 Volumenteilen einer 4N Lithiumhydroxidlösung gelöst und mit 185 Teilen Cyanurchlorid, wie im Beispiel 1

beschrieben kondensiert. Sobald die Reaktion beendet ist, werden 173 Teile Anilin-3-sulfonsäure, die zuvor in 1000 Volumenteilen Wasser unter Zusatz von 250 Volumenteilen 4N Lithiumhydroxidlösung gelöst wurden, zugegeben. Nun wird bei pH = 5.0 und bis auf 80°C ansteigender Temperatur gerührt. Man benötigt dazu ca. 250 Volumenteile 4N Lithiumhydroxidlösung. Die Reaktion ist nach etwa 2 Stunden beendet. Man erhält den Reaktivfarbstoff der folgenden Formel (Formel 5b) als gemischtes Lithium/Ammonium-Salz.

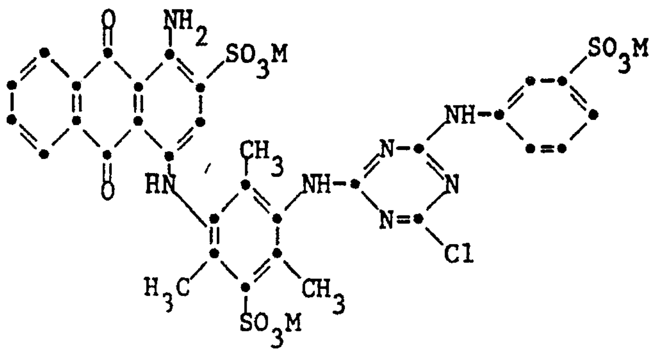

(5b)

Das $Li^+/NH_4^+$ -Verhältnis,das zunächst >1 ist, kann beliebig zugunsten des Ammoniumanteils verschoben werden über den teilweisen Ersatz der Lithiumhydroxidlösung durch wässrige Ammoniaklösung in einem der beiden oder beiden Reaktionsschritten.

Die salzhaltige Suspension des Rohfarbstoffs wird wie in Beispiel 1 beschrieben mittels Hyperfiltration entsalzt und aufkonzentriert. Man erhält so eine konzentrierte Farbstofflösung mit einem Chloridgehalt von ca. 0,4 Gew.%, die sich problemlos zu einer lagerstabilen Flüssigformulierung verarbeiten lässt. Der Farbstoffgehalt der Lösung liegt bei 34 Gew.% und ist deutlich höher als der Farbstoffgehalt einer Lösung, die unter Verwendung des Farbstoffs der Formel (5b) als Natriumsalz erhalten wird; hier ist die Lösung bereits bei einer Konzentration von 27 Gew.% Farbstoff gesättigt.

**Ansprüche**

1. Verfahren zur Herstellung konzentrierter, salzarmer, wässriger Lösungen von Aminotriazinyl-Reaktivfarbstoffen, dadurch gekennzeichnet, dass man von einem sulfogruppenhaltigen Farbstoff ausgeht, der einen oder mehrere mit Cyanurhalogenid reaktionsfähige Reste enthält und der zumindest teilweise als Ammoniumsalz vorliegt, diesen mit einem Cyanurhalogenid in Gegenwart von Lithiumhydroxid umsetzt und die salzhaltige Syntheselösung mittels eines Membrantrennverfahrens entsalzt und aufkonzentriert.

2. Verfahren gemäss Anspruch 1, dadurch gekennzeichnet, dass man als sulfogruppenhaltigen Farbstoff einen Azofarbstoff mit 2 bis 5 Sulfogruppen verwendet.

3. Verfahren gemäss Anspruch 1, dadurch gekennzeichnet, dass man als Cyanurhalogenid Cyanurchlorid verwendet.

4. Verfahren gemäss Anspruch 1, dadurch gekennzeichnet dass man den sulfogruppenhaltigen Farbstoff nach Ankondensieren des Triazinrestes mit einem farblosen Amin, insbesondere einer Anilinsulfonsäure umsetzt.

5. Verfahren gemäss den Ansprüchen 1 bis 4, dadurch gekennzeichnet, dass als Membrantrennverfahren die Hyperfiltration zur Anwendung gelangt.

6. Verfahren gemäss den Ansprüchen 1 bis 5, dadurch gekennzeichnet, dass man die entsalzte und aufkonzentrierte Farbstofflösung mit einem Polyphosphat oder Hydrogen/Dihydrogenphosphat-Puffer versetzt.

7. Wässrige Farbstofflösung erhalten nach dem Verfahren gemäss den Ansprüchen 1 bis 4, dadurch gekennzeichnet, dass diese den Aminotriazinyl-Reaktivfarbstoff als Lithium/Ammoniumsalz mit einem

Lithium/-Ammonium-Verhältnis von 1:1 bis 3:1 enthält.

8. Wässrige Farbstofflösung erhalten nach dem Verfahren gemäss den Ansprüchen 1 bis 7, dadurch gekennzeichnet, dass sie 10 bis 40 Gew.-% Aminotriazinylfarbstoff als Lithium/Ammoniumsalz und 0,5 bis 5 Gew.-% Polyphosphat oder Hydrogen/Dihydrogenphosphat-Puffer, enthält.

9. Verwendung der wässrigen Farbstofflösung erhalten nach dem Verfahren gemäss den Ansprüchen 1 bis 9 zum Färben und Bedrucken von natürlichen und regenerierten Cellulose-Fasermaterialien, vor allem Baumwolle und Viskose, sowie stickstoffhaltigem Fasermaterial.

## Claims

1. A process for the preparation of a concentrated aqueous, substantially salt-free solution of an aminotriazinyl reactive dye, which process comprises starting from a dye which contains sulfo groups and one or more radicals capable of reaction with cyanuric halide, said dye being at least partly in the form of the ammonium salt, reacting the latter with a cyanuric halide in the presence of lithium hydroxide, and deionising and concentrating the salt-containing synthesis solution by a membrane separation process.

2. A process according to claim 1, wherein an azo dye containing 2 to 5 sulfo groups is used as the dye which contains sulfo groups.

3. A process according to claim 1, wherein cyanuric chloride is used as the cyanuric halide.

4. A process according to claim 1, wherein the dye which contains sulfo groups, after condensation of the triazine radical, is reacted with a colourless amine, in particular an anilinesulfonic acid.

5. A process according to any one of claims 1 to 4, wherein hyperfiltration is employed as the membrane separation process.

6. A process according to any one of claims 1 to 5, wherein a polyphosphate or hydrogen/dihydrogen phosphate buffer is added to the deionised and concentrated dye solution.

7. An aqueous dye solution obtained by a process as claimed in any one of claims 1 to 4, which contains the aminotriazinyl reactive dye as lithium/ammonium salt with a lithium:ammonium ratio from 1:1 to 3:1.

8. An aqueous dye solution obtained by a process as claimed in any one of claims 1 to 7, which contains 10 to 40 % by weight of aminotriazinyl dye as lithium/ammonium salt and 0.5 to 5 % by weight of polyphosphate or hydrogen/dihydrogen phosphate buffer.

9. The use of an aqueous dye solution obtained by a process as claimed in any one of claims 1 to 8 for dyeing or printing natural and regenerated cellulosic fibre materials, in particular cotton and viscose, as well as nitrogen-containing fibre material.

## Revendications

1. Procédé de préparation de solutions concentrées, à faible teneur en sel et aqueuses, de colorants réactifs aminotriaziniques, caractérisé en ce qu'on part d'un colorant contenant des groupes sulfoniques, qui contient un ou plusieurs radicaux apte(s) à réagir avec un halogénure de cyanuryle et qui se présente, au moins en partie, sous la forme d'un sel d'ammonium, on fait réagir ce colorant avec un halogénure de cyanuryle, en présence d'hydroxyde de lithium, et la solution saline de synthèse est débarrassée de son sel et concentrée au moyen d'un procédé de séparation à membrane.

2. Procédé selon la revendication 1, caractérisé en ce qu'on utilise comme colorant contenant des groupes sulfoniques un colorant azoïque contenant de 2 à 5 groupes sulfoniques.

3. Procédé selon la revendication 1, caractérisé en ce qu'on utilise comme halogénure de cyanuryle le chlorure de cyanuryle.

4. Procédé selon la revendication 1, caractérisé en ce qu'on fait réagir le colorant contenant des groupes sulfoniques, après fixation par condensation du radical de triazine, avec une amine incolore, en particulier un acide anilinosulfonique.

5. Procédé selon les revendications 1 à 4, caractérisé en ce qu'on utilise l'hyperfiltration comme procédé de séparation à membrane.

6. Procédé selon les revendications 1 à 5, caractérisé en ce qu'on ajoute à la solution de colorant, débarrassée du sel et concentrée, un polyphosphate ou un tampon d'hydrogéno/dihydrogénophosphate.

7. Solution aqueuse de colorant, obtenue au moyen du procédé selon les revendications 1 à 4, caractérisée en ce qu'elle contient le colorant réactif aminotriazinique sous la forme d'un sel de lithium/ammonium avec un rapport lithium/ammonium de 1:1 à 3:1.

8. Solution aqueuse de colorant, obtenue au moyen du procédé selon les revendications 1 à 7, caractérisée en ce qu'elle contient de 10 à 40 % en poids de colorant aminotriazinique sous la forme de sel de lithium/ammonium et de 0,5 à 5 % en poids de polyphosphate ou de tampon d'hydrogéno/dihydrogénophosphate.

9. Utilisation de la solution aqueuse de colorant, obtenue d'après le procédé selon les revendications 1 à 8, pour teindre et imprimer des matières fibreuses de cellulose naturelles et régénérées, en particulier du coton et de la viscose, ainsi que des matières fibreuses azotées.